# EUROPEAN PATENT SPECIFICATION

(11) **EP 1 247 730 B1**
(45) Date of publication and mention of the grant of the patent: **21.02.2007**
(21) Application number: 02004975.5
(22) Date of filing: 05.03.2002
(51) Int. Cl.: B62K 25/28, B62K 25/04

(54) **Rear suspension attaching structure of motorcycle**
Hinterradaufhängungsbefestigungsvorrichtung für ein Motorrad
Structure de fixation pour suspension arrière de motocyclette

(30) Priority: 04.04.2001 JP 2001105335
(43) Date of publication of application: 09.10.2002
(73) Proprietor: HONDA GIKEN KOGYO KABUSHIKI KAISHA, Tokyo (JP)
(72) Inventor: Gogo, Kazuhiko, Wako-shi, Saitama (JP)
(74) Representative: Liska, Horst

(56) References cited:
- GB-A- 2 142 591
- US-A- 5 062 495
- US-A- 6 076 845
- PATENT ABSTRACTS OF JAPAN vol. 009, no. 242 (M-417), 28 September 1985 (1985-09-28) & JP 60 094808 A (SHIYOUWA SEISAKUSHO:KK), 28 May 1985 (1985-05-28)

## Description

The present invention relates to a rear suspension attaching structure of a motorcycle increasing a degree of freedom of a shape, a dimension, an attaching position or the like of a contiguous part by narrowing an interval of an attaching portion while maintaining a stroke amount of a cushion unit, further, preferable for concentrating parts at a surrounding of an end portion of the cushion unit.

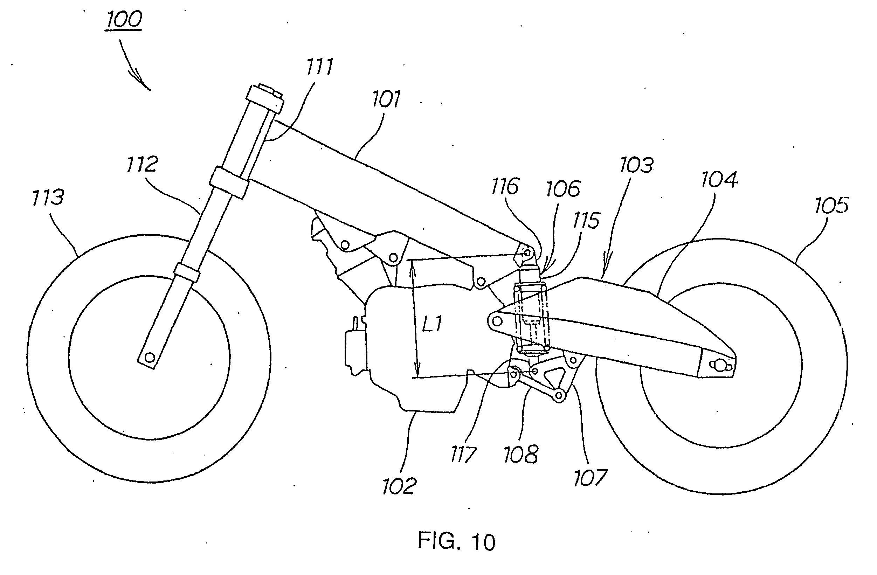

Fig. 10 is an explanatory view of a vehicle having a conventional rear suspension attaching structure, showing a state in which a power unit 102 constituted by an engine and a transmission is attached to a lower portion of a vehicle body frame 101 of a vehicle 100 and a rear suspension 103 is arranged at rear portions of the vehicle body frame 101 and the power unit 102.
According to the rear suspension 103, a swing arm 104 is swingably attached to the rear portion of the power unit 102, a rear wheel 105 is attached to a rear end of the swing arm 104, one end of a cushion unit 106 is attached to the rear portion of the vehicle body frame 101, a first link member 107 attached to the swing arm 104 is connected to other end of the cushion unit 106 and a second link member 108 attached to the power unit 102 is connected to the first link member 107. Further, numeral 111 designates a head pipe attached to a front end of the vehicle body frame 101, numeral 112 designates a front fork rotatably attached to the head pipe 111 and numeral 113 designates a front wheel.

The cushion unit 106 is constituted by attaching a first attaching portion 116 provided at an end portion of a cylinder portion 115 to the vehicle body frame 101 and attaching a second attaching portion 117 provided at other end thereof to the first link member 107, when a necessary amount of a stroke amount of the cushion unit 106 effecting influence on running performance and ride quality of the vehicle 100, is intended to ensure, an interval L1 between the first attaching portion 116 and the second attaching portion 117 of the cushion unit 106, is enlarged, as a result, a position of the first attaching portion 116 becomes high and shapes and attaching positions of a seat, a fuel tank and the like arranged on an upper side, are restricted. Or, as a result, a position of the second attaching portion 117 becomes low and lengths and attaching positions of the first and the second link members 107 and 108 arranged on a lower side are restricted. Further, it is difficult to arrange other part at surroundings of the first and the second attaching portions 116 and 117 of the cushion unit 106.

US 5,062,495 discloses a rear suspension attaching structure in accordance with the preamble of claim 1. There, the lower end of the rear cushion unit is directly connected to the vehicle body through a pivot pin.

JP-A-60094808 discloses a rear cushion unit of a motorcycle provided with a threading on the outer peripherie of an installation shaft for adjusting the variation in height of the motorcycle.

Therefore, it is an object of the invention to provide a rear suspension attaching structure of a motorcycle, wherein the attenuating force produced by the rear cushion unit can be increased.

To achieve this object there is provided a rear suspension attaching structure of a motorcycle, wherein one end of a swing arm is swingably attached to a pivotal shaft provided on a side of a vehicle body, a rear wheel is attached to other end of the swing arm, a side face of a cylinder of a rear cushion unit is attached to the swing arm via an attaching member and a lower end of the rear cushion unit is connected to the side of the vehicle body, characterized in that the lower end of the rear cushion unit is connected to the side of the vehicle body through a link mechanism.

By connecting the lower end of the rear cushion unit to the side of the vehicle body through a link mechanism, a change in the stroke amount of the rear cushion unit is increased at a certain stroke of the rear swing arm. Therefore, the moving speed of the piston of the rear cushion unit is also increased so that the attenuating force produced by the rear cushion unit is also increased.

By attaching the side face of the cylinder of the rear cushion unit to the swing arm via the attaching member, there can be reduced an interval between an attaching portion of the rear cushion unit on a side of the swing arm and an attaching portion thereof on a side of the vehicle body when the rear cushion unit is attached between the swing arm and the side of the vehicle body, and a new space can be formed at a surrounding of an end portion of the rear cushion unit.

Therefore, there can be increased a degree of freedom of a shape, a dimension and an attaching position of a part contiguous to the end portion of the rear cushion unit, further, other part can be arranged at the surrounding of the end portion of the rear cushion unit.

Claim 2 is characterized in that a male screw is formed at the side face of the cylinder and a female screw screw-coupled to the male screw is formed at the attaching member.
By forming the female screw screw-coupled to the male screw at the attaching member, a cylinder can be moved in a direction of extending a cylinder axis relative to the attaching member by rotating the cylinder, an interval between the attaching portion of the rear cushion on the side of the swing arm and the attaching portion of the rear cushion on the side of the vehicle body can be changed and therefore, a position on the side of the vehicle body relative to the swing arm, for example, a riding position of the rider can be moved upwardly and downwardly.
Fig. 1 is a side view of a motorcycle having a rear suspension attaching structure according to the invention (first embodiment) .
Fig. 2 is a side view showing an essential portion of the rear suspension attaching structure according to the invention (first embodiment).
Fig. 3 is a view viewing Fig. 2 in an arrow mark 3 direction.
Fig. 4 is a sectional view taken along a line 4-4 of Fig. 2.
Fig. 5 is a first operation view for explaining operation of a rear suspension adopting the rear suspension attaching structure according to the invention (first embodiment).
Fig. 6 is a second operation view for explaining operation of the rear suspension adopting the rear suspension attaching structure according to the invention (first embodiment).
Fig. 7 is an operation view for explaining operation of the rear suspension attaching structure.
Fig. 8 is a side view of an essential portion of a rear suspension attaching structure according to the invention (second embodiment).
Fig. 9 is the side view of an essential portion of a rear suspension attaching structure according to the invention (third embodiment).
Fig. 10 is an explanatory view of a vehicle having a conventional rear suspension attaching structure.

An explanation will be given of embodiments of the invention in reference to attached drawings as follows. Further, the drawing is viewed in a direction of notation.

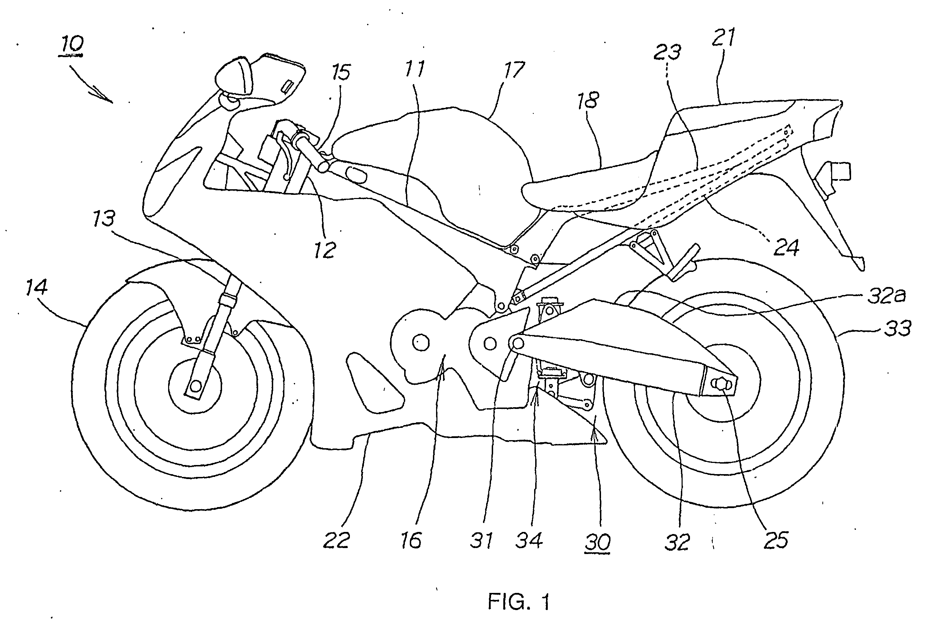

Fig. 1 is a side view of a motorcycle adopting a rear suspension attaching structure according to the invention (first embodiment) and according to a motorcycle 10, a front fork 13 is steerably attached to a main frame 11 and a head pipe 12 provided at a front end portion of the main frame 11, a front wheel 14 is attached to a lower end of the front fork 13, a steering handlebar 15 is attached to an upper portion of the front fork 13, a power unit 16 constituting a vehicle body side constituted by an engine and a transmission is attached to a lower portion of the main frame 11, a rear suspension 30 is attached to a rear portion of the power unit 16, a fuel tank 17 is attached to an upper portion of the main frame 11 and seats 18 and 21 are arranged on a rear side of the fuel tank 17. Further, numeral 22 designates a cowling, numerals 23 and 24 designate a seat frame and a sub frame extended from a rear portion of the main frame 11 in a rear skewed upper direction and numeral 25 designates a rear wheel shaft.

According to the rear suspension 30, a pivotal shaft 31 is provided at a rear portion of the power unit 16, a front end of a swing arm 32 is swingably attached to the pivotal shaft 31, a rear wheel 33 is attached to a rear end of the swing arm 32, an upper end of a rear cushion unit 34 for absorbing impact such that the impact is not propagated to a vehicle body via the rear wheel 33 and the swing arm 32, is attached at a vicinity of the pivotal shaft 31 of the swing arm 32 and a lower end of the rear cushion unit 34 is attached to a lower portion of the power unit 32 via a link mechanism (described later in details).

The swing arm 32 is a member formed with a mountain shape portion 32a in which a central portion in the longitudinal direction of an upper portion thereof is heightened in a mountain shape and the upper end of the rear cushion unit 34 is attached to a middle portion of the mountain shape portion 32a, in details, frontward from the central portion in the longitudinal direction of the mountain shape portion 32a.

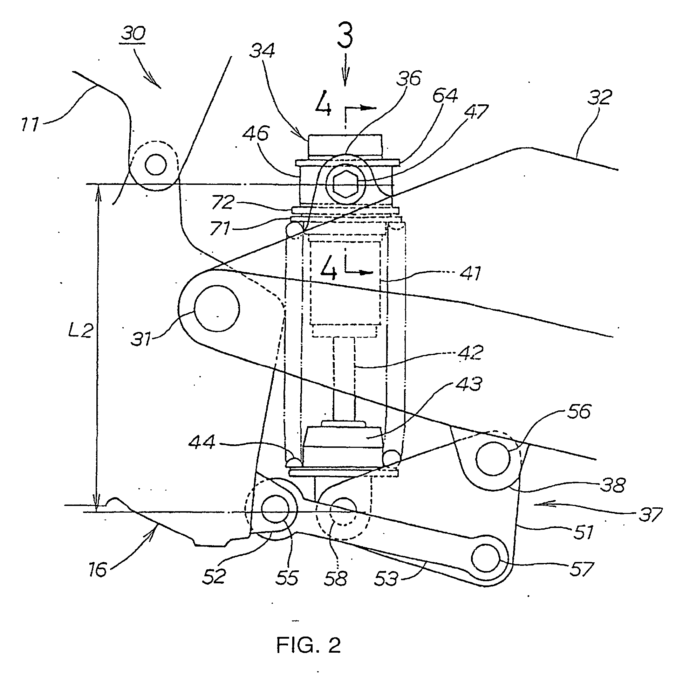

Fig. 2 is a side view showing an essential portion of the rear suspension attaching structure according to the invention (first embodiment) and the swing arm 32 is provided with upper brackets 36, 36 (the upper bracket 36 on the depth side is not illustrated) for attaching the rear cushion unit 34 at an upper portion thereof and is provided with lower brackets 38, 38 (the lower bracket 38 on the depth side is not illustrated) for attaching the link mechanism 37 at a lower portion thereof.

The rear cushion unit 34 is constituted by a cylinder portion 41 constituting a cylinder, a piston rod 42 attached to a piston, not illustrated, movably contained in the cylinder portion 41, a lower end attaching portion 43 provided at an end portion of the piston rod 42 and a suspension spring 44 interposed between respectives of the cylinder portion 41 and the lower end attaching portion 43, a cylinder attaching member 46 constituting an attaching member coupled, by screws, to a side face of the cylinder portion 41, is swingably attached to the upper brackets 36 of the swing arm 32 and the lower end attaching portion 43 is attached to the link mechanism 37. Further, numerals 47, 47 (notation 47 on the depth side is not illustrated) designate upper attaching bolts constituting a swing shaft of the cylinder attaching member 46.

The link mechanism 37 is constituted by a first link 51 having a triangular shape in a side view thereof swingably attached to the lower brackets 38 of the swing arm 32 and a second link 53 one end of which is swingably attached to the first link 51 and which is swingably attached to a link attaching portion 52 provided at a lower portion of the power unit 16. Further, numeral 55 designates a swing shaft on the side of the power unit.

The first link 51 is connected to the lower brackets 38 of the swing arm 32 by a first shaft 56, connected to the second link 52 by a second shaft 57 and connected to the lower end attaching portion 43 of the rear cushion unit 34 by a third shaft 58 respectively swingably.
The power unit swing shaft 55 is a shaft disposed on a lower side of the pivotal shaft 31.
Here, an interval between the upper portion attaching bolt 47 and the third shaft 58 is designated by notation L2.

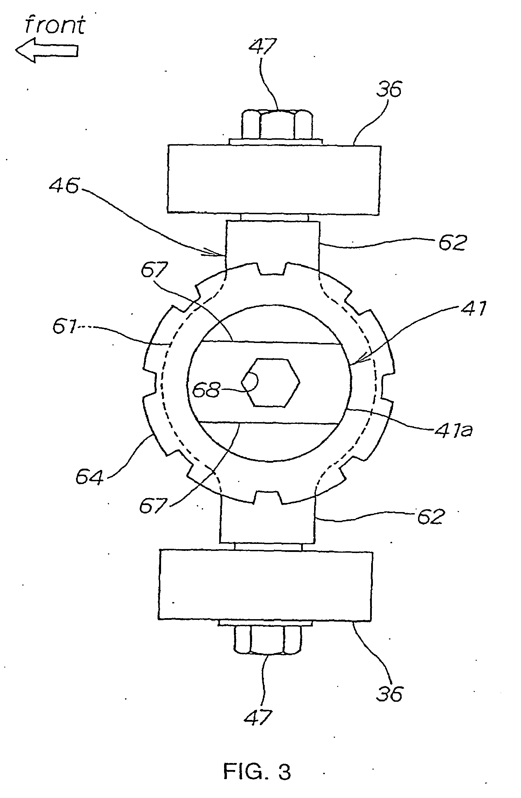

Fig. 3 is a view viewing Fig. 2 in an arrow mark 3 direction and a white arrow mark (front) designates a front direction of the vehicle. (the same as follows)
The cylinder attaching member 46 is constituted by a circular ring portion 61 provided at a center thereof and arm portions 62, 62 extended from the circular ring portion 61 to the left and to the right, the circular ring portion 61 is coupled, by screws, to a side face 41a of the cylinder portion 41 and the arm portions 62, 62 is attached to the upper brackets 36, 36 of the swing arm 32 respectively by the upper portion attaching bolts 47, 47.

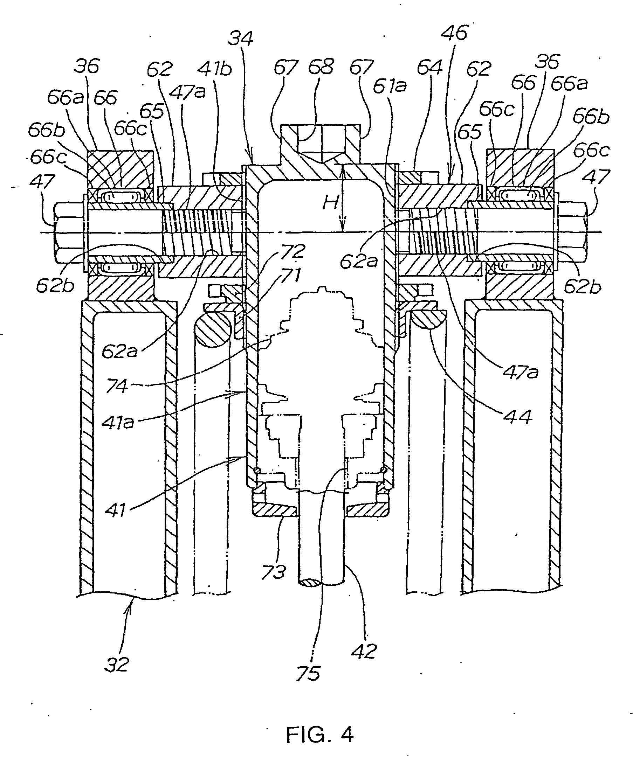

Fig. 4 is a sectional view taken along a line 4-4 of Fig. 2 showing a state in which there is provided a male screw portion 41b formed with a male screw at the side face 41a of the cylinder portion 41 of the rear cushion unit 34, a female screw portion 61a formed with a female screw at the circular ring portion 61 (refer to Fig. 3) of the cylinder attaching member 46, is screw-coupled to the male screw portion 41b, pivotal movement of the cylinder portion 41 is stopped by a lock nut 64 and the arm portions 62, 62 of the cylinder attaching member 46 are attached to the upper brackets 36, 36 of the swing arm 32 respectively by the upper attaching bolts 47 and 47.

The cylinder attaching member 46 is formed with a female screw portion 62a and a large diameter hole 62b larger than an inner diameter of the female screw portion 62a at the arm portion 62.
According to the upper attaching bolt 47, a male screw portion 47a is screw-coupled to the female screw portion 62a and the upper attaching bolt 47 is rotatably attached to the upper bracket 36 via a color 65 an end portion of which is inserted into the large diameter hole 62b and a needle roller bearing 66.

The needle roller bearing 66 is constituted by an outer ring 66a and a plurality of needle rollers 66b provided on an inner side of the outer ring 66a. Further, notations 66c, 66c designate dust seals for preventing earth and sand, rain water or the like from entering into the roller bearing 66. Notation H designates a height from the center of the upper attaching bolt 47 to an end portion of the cylinder portion 41 and the upper attaching bolt 47 can be arranged on the lower side of the end portion of the cylinder portion 41.

Here, numerals 67, 67 designate spanner touch portions constituted by parallel faces for touching a spanner, numeral 68 designates a hexagonal hole for inserting a hexagonal wrench, by loosening the lock nut 64, rotating the cylinder portion 41 relative to the cylinder attaching member 46 by a spanner touched to the spanner touch portions 67, 67 or a hexagonal wrench inserted into the hexagonal hole 68 and moving the cylinder portion 41 in a direction of extending the cylinder shaft (that is, an up and down direction of the drawing), in Fig. 2, the lower brackets 38 can be moved upwardly and downwardly via the lower end attaching portion 43 of the rear cushion unit 34 and the first link 51.

For example, when the cylinder portion 41 is elevated along the cylinder axis, the lower brackets 38 are elevated relative to the pivotal shaft 31 and therefore, a rear downward angle of the swing arm 32 is reduced. Therefore, in Fig. 1, the pivotal shaft 31 is lowered relative to the rear wheel shaft 25 and the seat 18 of a rider is lowered.

Further, in Fig. 2, for example, when the cylinder portion 41 is lowered along the cylinder shaft, the lower brackets 38 are lowered relative to the pivotal shaft 31 and therefore, the rear downward angle of the swing arm 32 is increased. Therefore, in Fig. 1, the pivotal shaft 31 is elevated relative to the rear wheel shaft 25 and the seat 28 of the rider is elevated.
By adjusting the position of the seat 18 in this way, a difference in physical configuration or taste of the rider can be dealt with.

Referring back to Fig. 4, numeral 71 designates a spring support member coupled, by screws, to the main screw portion 41b of the cylinder portion 41 for supporting an end of the suspension spring 44, numeral 72 designates a lock nut for stopping pivotal movement of the spring support member 71, numeral 73 designates a cap for closing an opening of the cylinder portion 41, numeral 74 designates a piston movably inserted into the cylinder portion 41 and numeral 75 designates a rod guide provided at an end portion of the cylinder portion 41 for guiding the piston rod 42.

An explanation will be given of operation of the above-described rear suspension 30 as follows.

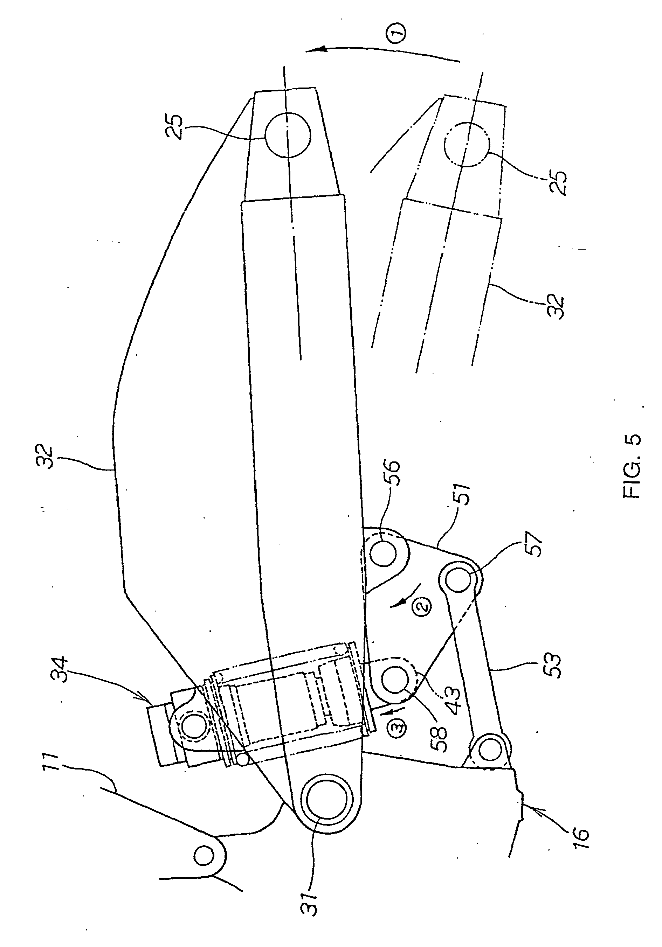

Fig. 5 is a first operation view for explaining operation of the rear suspension adopting the rear suspension attaching structure according to the invention (first embodiment).
In Fig. 1, for example, when the motorcycle 10 rides over a projected portion on a load face and the rear wheel 33 is moved upwardly relative to the vehicle body side (main frame 11 and power unit 16), in Fig. 5, the swing arm 32 is swung upwardly from a position shown by imaginary lines to a position shown by bold lines centering on the pivotal shaft 31 as in an arrow mark ①, in accordance therewith, the first link 51 is swung centering on the first shaft 56 in the clockwise direction as shown by an arrow mark ②, thereby, the lower end attaching portion 43 attached to the third shaft 58 is lifted as shown by an arrow mark ③.

Therefore, the rear cushion unit 34 produces attenuating force while being contracted to thereby absorb impact.

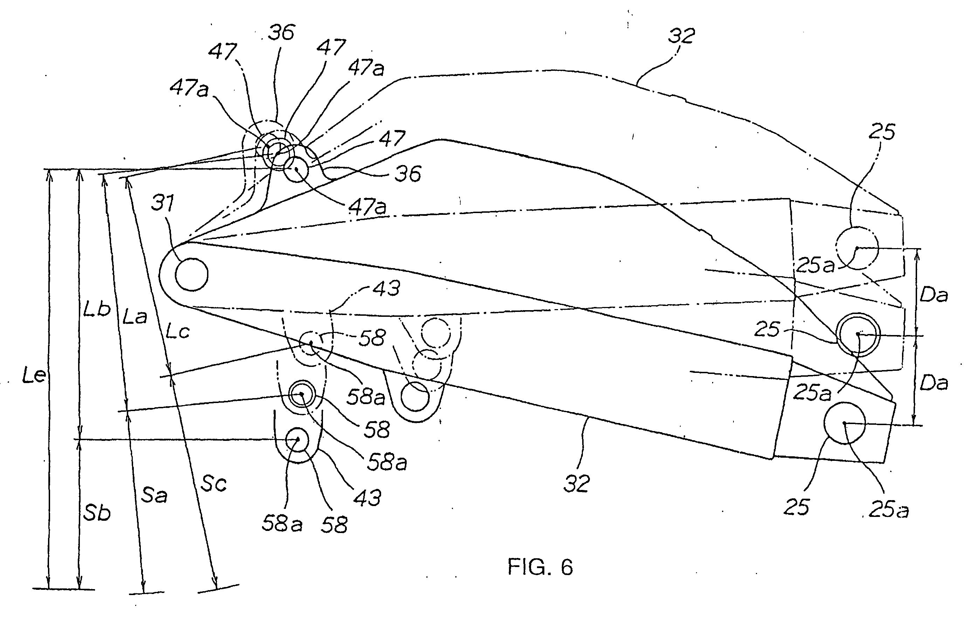

Fig. 6 is a second operation view for explaining operation of the rear suspension adopting the rear suspension attaching structure according to the invention (first embodiment) and is a view for explaining a relationship between an amount of moving the rear wheel shaft 25 of the swing arm 32 in the up and down direction and a stroke amount of the rear cushion unit 34. Further, in the drawing, a large ⊚ mark designates the rear wheel shaft 25 and a small ⊚ mark designates the upper attaching bolt 47 and the third shaft 58.
When the rear wheel shaft 25 is disposed at a position designated by the ⊚ mark, that is, a position in a state in which a rider rides on the motorcycle, the vehicle is stopped (without operating force in accelerating or decelerating the vehicle to the vehicle) and the vehicle is erected (also referred to as 1G state position of riding'. Hereinafter, the position is described as 'neutral position of riding'. This is also neutral positions of riding of the swing arm 32 and rear wheel 33 (refer to Fig. 1)), the third shaft 58 constituting a connecting shaft of the link mechanism 37 (refer to Fig. 2) and the rear cushion unit 34 (refer to Fig. 2), is disposed at a position designated by the ⊚ mark.

When a total length of the cushion unit 34 in this case, (here, a distance between an axis center 47a of the upper attaching bolt 47 and an axis center 58a of the third shaft 58, the same as follows) is designated by notation La and a total length of the rear cushion unit 34 extended maximally is designated by notation Le, a stroke amount of the rear cushion unit 34 at the neutral position of riding is designated by notation Sa. (That is, Sa = Le - La)

First, when the swing arm 32 is swung from the neutral position of riding to an extended side of the cushion unit 34 (swung downwardly) (refer to Fig. 2), the swing arm 32, the upper brackets 36 of the swing arm 32, the lower end attaching portion 43 of the rear cushion unit 34, the third shaft 58 and the rear wheel shaft 25 are disposed at positions designated by bold lines and a moving amount of the rear wheel shaft 25 in this case to the extended side of the rear cushion unit 34 (moving amount of an axis center 25a) is designated by notation Da. At this occasion, a total length of the rear cushion unit 34 is designated by notation Lb and the stroke amount is designated by notation Sb. (That is, Sb = Le - Lb)

Further, when the swing arm 32 is swung from the neutral position of riding to a contracted side of the rear cushion unit 34 (swung upwardly), the swing arm 32, the upper brackets 36 of the swing arm 32 the lower end attaching portion 43 of the rear cushion unit 34, the third shaft 58 and the rear wheel shaft 25, are disposed at positions designated by one-dotted chain lines and a moving amount of the rear wheel shaft 25 to the contracted side of the cushion unit 43, is designated by notation Da the same as that of the above-described moving amount. In this case, the total length of the rear cushion unit 34 is designated by notation Lc and the stroke amount is designated by notation Sc. (That is, Sc = Le - Lc)

According to the rear suspension 30 of the invention (refer to Fig. 2), by using the link mechanism 37 (refer to Fig. 2), there is established (Sc-Sa) 〉 (Sa-Sb).
That is, by making a stroke to the contracted side of the rear cushion unit 34 by the rear wheel shaft 25, a change in the stroke amount of the rear cushion unit 34 is increased.
Thereby, the more contracted the rear cushion unit 34, the more increased is the moving speed of the piston of the rear cushion unit 34 and the more increased is the attenuating force produced as the rear cushion unit 34.

An explanation will be given as follows of operation of the above-described rear suspension attaching structure.

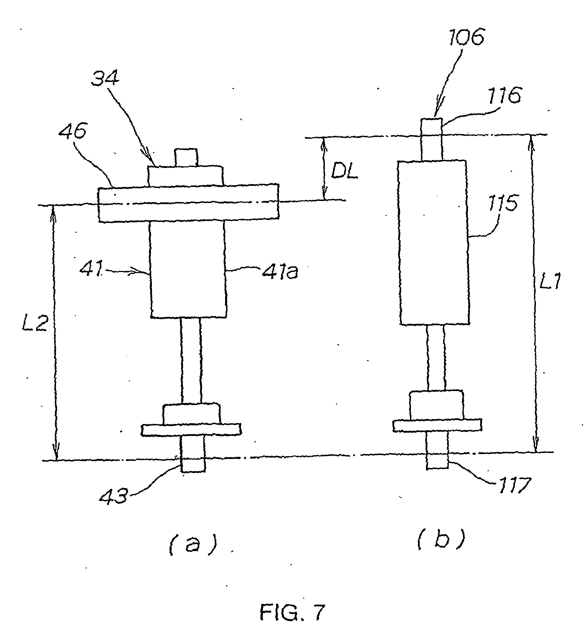

Figs. 7 (a) and 7(b) are operation views for explaining operation of the rear suspension attaching structure, Fig. 7 (a) shows the embodiment and Fig. 7 (b) shows a comparative example.
In the embodiment of Fig. 7(a), an interval between a portion of the cylinder attaching member 46 attached to the swing arm and a portion of the lower attaching portion 43 attached to the link mechanism, is designated by notation L2.

In the comparative example of Fig. 7(b), an interval between a portion of the first attaching portion 116 of the cushion unit 106 attached to the vehicle frame and a portion of the second attaching portion 117 of the cushion unit 106 attached to the first link member, is designated by notation L1.

In Figs. 7(a) and 7(b), according to the invention, the cylinder attaching member is attached to the side face 41a of the cylinder portion 41, according to the comparative example, the first attaching portion 116 is attached to the end portion of the cylinder portion 115 and therefore, the interval L2 according to the embodiment can be made shorter than the interval L1 according to the comparative example by a distance DL.

Further, although according to the above-described embodiment, in Fig. 1 through Fig. 3, the side face 41a of the cylinder portion 41 of the rear cushion unit 34 is attached to the swing arm 32 and the lower end attaching portion 43 of the rear cushion unit 34 is attached to the vehicle body side, (that is, the power unit 16) via the link mechanism 37, the side face 41a of the cylinder portion 41 may be attached to the vehicle body side, for example, the power unit 16 via the link mechanism 37 and the lower end attaching portion 43 may be attached to the swing arm 32.

As has been explained as described above in reference to Fig. 1, Fig. 2 and Fig. 4, the invention is firstly featured in that one end of the swing arm 32 is swingably attached to the pivotal shaft 31 provided at the power unit 16, the rear wheel 33 is attached to other end of the swing arm 32, the side face 41a of the cylinder portion 41 of the rear cushion unit 34 is attached to the swing arm 32 via the cylinder attaching member 46 and the lower end of the rear cushion unit 34 is connected to the power unit 16 via the link mechanism.

By attaching the side face 41a of the cylinder portion 41 of the rear cushion unit 34 to the swing arm 32 via the cylinder attaching member 46, there can be reduced an interval between the attaching portion of the rear cushion unit 34 on the side of the swing arm (that is, cylinder attaching member 46) and the attaching portion of the cushion unit 34 on the side of the vehicle body (that is, the lower end attaching portion 43) when the rear cushion unit 34 is attached between the swing arm 32 and the power unit 16, and a new space can be formed at a surrounding of an end portion of the rear cushion unit 34.

Therefore, there can be increased the degree of freedom of shapes, dimensions and attaching positions of parts contiguous to the end portion of the rear cushion unit 34, for example, the fuel tank 17, the seat 18, an electric equipment and the like. Further, there can be arranged other parts, for example, an oil tank, a battery, an electric equipment and the like arranged at other locations or new parts at the surrounding of the end portion of the rear cushion unit 34.

Further, by attaching the side face 41a of the cylinder portion 41 of the rear cushion unit 34 to the swing arm 32, a large space can be formed among a rear portion of the main frame 11 on an upper side of the swing arm 32, the vehicle body side provided with the fuel tank 17 and the seat 18 and the swing arm 32 and a battery, an electric equipment and the like or other parts can concentratedly be arranged. Further, by concentrating parts, assembling is facilitated and parts can be arranged compactly and promotion of productivity and the downsizing of the motorcycle 10 can be achieved.

Further, many parts can be made contiguous to the end portion of the rear cushion unit 34 arranged substantially at a central portion of the vehicle body, by concentration of parts to the central portion of the vehicle body, weight is concentrated to the central portion of the vehicle body and the maneuverability of a vehicle for road race or an offroad vehicle can be promoted.

The invention is secondly featured in that there is provided the screw portion 41b formed with the male screw at the side face 41a of the cylinder portion 41 and there is provided the female portion 61a formed with the female screw screw-coupled to the male screw at the cylinder attaching member 46.

By screw-coupling the male screw portion 41b of the cylinder portion 41 to the female screw portion 61a of the cylinder attaching member 46, by rotating the cylinder portion 41 by using a tool of a spanner, a hexagonal wrench or the like, the cylinder portion 41 can be moved in the direction of extending of the cylinder axis relative to the cylinder attaching member 46 and the interval L2 between the cylinder attaching member 46 and the lower end attaching portion 43 of the rear cushion unit 34, can be changed.

Therefore, the position of the vehicle body side relative to the swing arm 32, for example, the height of the seat 18 can be changed and a change in physical configuration or taste of the rider can be dealt with. Further, for example, a minimum height above ground from the lower end of the power unit 16 to the ground face can be adjusted and when the minimum height above ground is increased, performance of driving on rough road can be promoted in an offroad vehicle.

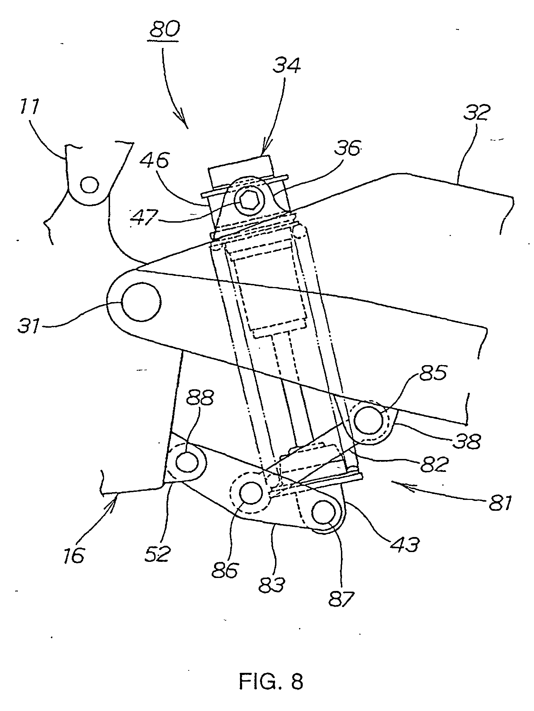

Fig. 8 is a side view of an essential portion of a rear suspension attaching structure according to the invention (second embodiment) and constitutions the same as those in the first embodiment shown in Fig. 2, are attached with the same notations and a detailed explanation thereof will be omitted.
A rear suspension 80 is constituted by the pivotal shaft 31, the swing arm 32, the rear cushion unit 34 and a link mechanism 81, the upper end of the rear cushion unit 34 is swingably attached to the upper brackets 36 of the swing arm 32 and the lower end of the rear cushion unit 34 is swingably attached to the link mechanism 81.

The link mechanism 81 is constituted by a first link 82 one end of which is swingably attached to the lower brackets 38 of the swing arm 32, and a second link 83 one end of which is swingably attached to the link attaching portion 52 of the power unit 16, other end of which is swingably attached to the lower end attaching portion 43 of the rear cushion unit 34 and a middle portion of which is swingably attached to other end of the first link 82. Further, numeral 85 designates a first shaft, numeral 86 designates a second shaft, numeral 87 designates a third shaft, numeral 88 designates a power unit swing shaft and the third shaft 87 is arranged on a lower side of the second shaft 86 or at a height the same as that of the second shaft 86.

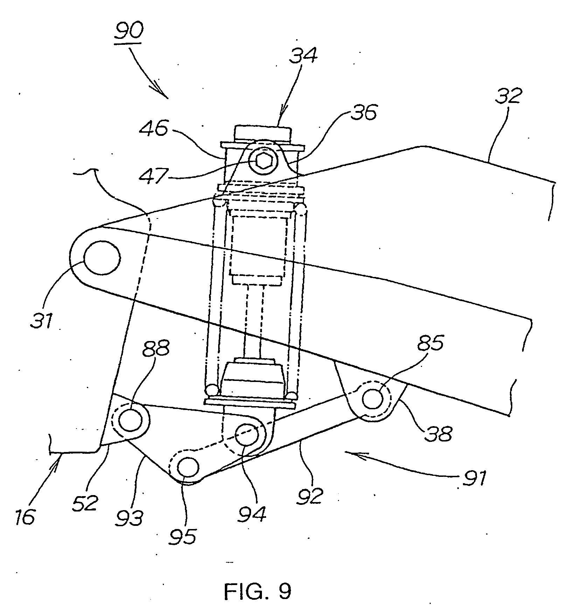

Fig. 9 is a side view of an essential portion of a rear suspension attaching structure according to the invention (third embodiment), constitutions the same as those in the first embodiment and the second embodiment are attached with the same notations and a detailed explanation thereof will be omitted.
A rear suspension 90 is constituted by the pivotal shaft 31, the swing arm 32, the rear cushion unit 34 and a link mechanism 91, the upper end of the rear cushion unit 34 is swingably attached to the power brackets 36 and a lower end of the rear cushion unit 34 is swingably attached to the link mechanism 91.

The link mechanism 91 is constituted by a first link 92 one end of which is swingably attached to the lower brackets 38 of the swing arm 32, a second link 93 having a triangular shape in a side view thereof, one corner portion of which is swingably attached to the link attaching portion 52 of the power unit 16, other corner portion of which is swingably attached to the lower end attaching portion 43 of the rear cushion unit 34 and a remaining corner portion of which is swingably attached to other end of the first link 92. Further, numeral 94 designates a second shaft, numeral 95 designates a third shaft and the second shaft 94 is arranged on an upper side of the third shaft 95.

Further, although according to the embodiment, the there are provided both of the spanner touch portions 67, 67 and the hexagonal hole 68, either of the spanner touch portions 67, 67 and the hexagonal hole 68 may be provided.

In the invention, one end of a swing arm 32 is swingably attached,to a pivotal shaft 31 provided at a power unit 16, a rear wheel 33 is attached to other end of the swing arm 32, a side face 41a of a cylinder portion 41 of a rear cushion unit 34 is attached to the swing arm 32 via an attaching member 46 and a lower end of the rear cushion unit 34 is attached to the power unit 16.
Therefore, an interval between an attaching portion of the rear cushion unit on a side of the swing arm and an attaching portion thereof on a side of a vehicle body, can be reduced when the rear cushion unit is attached between the swing arm and the vehicle body side and a new space can be formed at a surrounding of an end portion of the rear cushion unit. Therefore, a degree of freedom of a shape, a dimension and an attaching position of a part contiguous to the end portion of the rear cushion unit can be increased, further, other part can be arranged at the surrounding of the end portion of the rear cushion unit.

## Claims

1. A rear suspension attaching structure of a motorcycle wherein one end of a swing arm (32) is swingably attached to a pivotal shaft (31) provided on a side (16) of a vehicle body, a rear wheel (33) is attached to other end of the swing arm (32), a side face (41a) of a cylinder (41) of a rear cushion unit (34) is attached to the swing arm (32) via an attaching member (46) and a lower end of the rear cushion unit (34) is connected to the side of the vehicle body,
**characterized in that** the lower end of the rear cushion unit (34) is connected to the side of the vehicle body through a link mechanism (37; 81).

2. The rear suspension attaching structure of a motorcycle according to Claim 1, **characterized in that** a male screw (41 b) is formed at the side face (41 a) of the cylinder (41) and a female screw (61 a) screw-coupled to the male screw (41b) is formed at the attaching member (46).

## Patentansprüche

1. Hinterradaufhängungs-Halterungsstruktur eines Kraftrads, worin ein Ende eines Schwingarms (32) an einer Schwenkwelle (31), die an einer Seite (16) eines Fahrzeugkörpers vorgesehen ist, schwenkbar angebracht ist, ein Hinterrad (43) an dem anderen Ende des Schwingarms (32) angebracht ist, eine Seitenfläche (41 a) eines Zylinders (41) einer hinteren Dämpfereinheit (34) an dem Schwingarm (32) über ein Halterungselement (46) angebracht ist und ein Unterende der hinteren Dämpfereinheit (34) mit der Seite des Fahrzeugkörpers verbunden ist,
**dadurch gekennzeichnet, dass** das Unterende der hinteren Dämpfereinheit (34) mit der Seite des Fahrzeugkörpers durch einen Lenkermechanismus (37; 81) verbunden ist.

2. Hinterradaufhängungs-Halterungsstruktur eines Kraftrads gemäß Anspruch 1, **dadurch gekennzeichnet, dass** ein Außengewinde (41b) an der Seitenfläche (41a) des Zylinders (41) ausgebildet ist, und ein mit dem Außengewinde (41b) verschraubtes Innengewinde (61a) an dem Halterungselement (46) ausgebildet ist.

## Revendications

1. Structure de fixation de suspension arrière d'une motocyclette, dans laquelle une première extrémité d'un bras oscillant (32) est fixée de manière oscillante sur un arbre de pivotement (31) agencé sur un côté (16) d'une carrosserie de véhicule, une roue arrière (33) est fixée sur l'autre extrémité du bras oscillant (32), une face latérale (41a) d'un cylindre (41) d'une unité d'amortissement arrière (34) est fixée sur le bras oscillant (32) par l'intermédiaire d'un élément de fixation (46), et une extrémité inférieure de l'unité d'amortissement arrière (34) est reliée au côté de la carrosserie de véhicule,
**caractérisée en ce que** l'extrémité inférieure de l'unité d'amortissement arrière (34) est reliée au côté de la carrosserie de véhicule par un mécanisme de biellettes (37, 81).

2. Structure de fixation de suspension arrière d'une motocyclette selon la revendication 1, **caractérisée en ce qu'**un filet mâle (41b) est formé au niveau de la face latérale (41a) du cylindre (41), et un filet femelle (61a) destiné à être couplé de manière vissée au filet mâle (41b) est formé au niveau de l'élément de fixation (46).
